# EUROPEAN PATENT APPLICATION

(11) **EP 4 706 897 A1**
(43) Date of publication of application: **11.03.2026**
(21) Application number: 24199301.3
(22) Date of filing: 09.09.2024
(51) Int. Cl.: B25J 9/04, B25J 9/10, B25J 19/00, B64F 1/36

(54) **AN ARRANGEMENT FOR MOVING OBJECTS**

(71) Applicant: Lifts All AB, 177 70 Järfälla (SE)
(72) Inventor: NYQUIST, Olov, 126 34 Hägersten (SE); KAIN, Joakim, 139 36 Värmdö (SE); HELIN, David, 741 30 Knivsta (SE); BARTOS, Elias, 141 38 Huddinge (SE); OLSSON, Maja, 112 40 Stockholm (SE)
(74) Representative: Zacco Sweden AB

(57) **Abstract**

An arrangement for moving objects, comprising a plurality of first arms (1, 3) and second arms (2, 4), each first arm (1, 3) being connected to a neighbouring second arm (2, 4) through a hinge (5, 6, 7). Between each pair of hinges (6, 7) that connects a first arm (3) with two second arms (2, 4) there is provided a first wire (14), which extends from a first hinge (6) of that pair of hinges to a second hinge (7) of that pair of hinges and which extends around a second part (11) of said first hinge (6) and a second part (13) of said second hinge (7) of said pair of hinges (6, 7), and between each pair of hinges (5, 6) that connects a second arm (2) with two first arms (1, 3) there is provided a second wire (15) which extends from a first hinge (5) of that pair of hinges (5, 6) to a second hinge (6) of that pair of hinges and which extends around a first part (8) of said first hinge (5) and a first part (10) of said second hinge (6) of said pair of hinges (5, 6).

## Description

### TECHNICAL FIELD

The present invention relates to an arrangement for moving objects, comprising a plurality of first arms and at least one second arm, each first arm being connected to a neighbouring second arm through a hinge, each hinge comprising a first part fixedly connected to the first arm and a second part fixedly connected to the second arm, wherein each pair of a first part and a second part of a hinge being rotably arranged in relation to each other around a rotational axis which is generally perpendicular to a longitudinal axis of the respective first and second arm connected by the hinge.

In particular, the present invention relates to an arrangement for moving luggage from a conveyor belt into a container.

### BACKGROUND

Arrangements for moving luggage from a luggage conveyor to a container are well known and are typically used in air ports or the like. The arrangement typically has a fixed part and a moving part that comprises a platform on which luggage, typically bags, are positioned when being moved from the luggage conveyor to the container. The arrangement may typically have a plurality of arms, the motion of which is either fully or partly controlled manually or by a control unit. The motion may comprise both a vertical motion and a horizontal motion.

A linear motion of the platform in the horizontal plane is often preferred when moving luggage from the conveyor belt to the container. Upon manual control of a horizontal motion of an arm arrangement, in which the platform for carrying luggage is typically held by the operator, linear motion may be difficult to achieve, and the success of the motion may be dependent on the performance of the operator. A robotised solution may solve the problem, but such a solution adds complexity since it requires drive mechanisms for each arm and a need of a control unit for controlling the operation of the drive mechanisms.

### THE OBJECT OF THE INVENTION

It is an object of the invention to present an arrangement for moving objects that allows a platform or the like formed by or carried by an arm arrangement of the arrangement for moving objects to follow a predetermined trajectory while being controlled manually, without being dependent of the skill of an operator.

It is also an object of the invention to present an arrangement for moving objects that is relatively easy and safe to handle by an operator during operation.

### SUMMARY

The object of the invention is achieved by means of an arrangement for moving objects, comprising
- a plurality of first arms and at least one second arm, each first arm being connected to a neighbouring second arm through a hinge, each hinge comprising
- a first part fixedly connected to the first arm and
- a second part fixedly connected to the second arm,
- each pair of a first part and a second part of a hinge being rotably arranged in relation to each other around a rotational axis which is generally perpendicular to a longitudinal axis of the respective first and second arm connected by the hinge, said arrangement being

### characterised in that:

- between each pair of hinges that connects a first arm with two second arms there is provided a first wire, which extends from a first hinge of that pair of hinges to a second hinge of that pair of hinges and which extends around a second part of said first hinge and a second part of said second hinge of said pair of hinges, and that,
- between each pair of hinges that connects a second arm to two first arms there is provided a second wire which extends from a first hinge of that pair of hinges to a second hinge of that pair of hinges and which extends around a first part of said first hinge and a first part of said second hinge of said pair of hinges. The wire or wires are arranged so as follow a rotational motion of the hinge part that it/they extend(s) around, and not to slide in relation to the periphery of that hinge part. Each hinge engaged by at least one wire. Thanks to the provision of the wires, a predetermined trajectory of each of the arms can be provided for, which is not dependent on and cannot be changed by an operator's manipulation.

According to some embodiments, said first part and second part of each respective hinge has a portion which has the shape of a wheel or shaft with a predetermined diameter, and that the respective wire extends around said portions of the respective wheel or shaft, and the diameters of said portions of the respective first and second parts are dimensioned such that the motion of an arm forming a distal end of the arm arrangement will perform a linear motion with regard to a first arm that forms an opposite fixed distal end of the arm arrangement.

According to some embodiments, said linear motion is a rectilinear motion.

According to some embodiments, the arm that forms a distal end and that will perform a linear motion forms or is fixedly connected to a platform for carrying objects thereon.

According to some embodiments, the first arm that forms a fixed distal end of the arm arrangement forms a base part of the arrangement, from which the remaining arms of the arm arrangement extend.

According to some embodiments, when the arrangement is in an operational position, the base part is non-rotable in the horizontal plane.

According to some embodiments, when the arrangement is in an operational position, the rotational axes of the hinges extend in a vertical direction.

According to some embodiments, at least one of the hinges comprises a locking device for locking against rotation between the first part and the second part of that hinge.

According to some embodiments, a first arm that forms a fixed distal end of the arm arrangement forms a base part of the arrangement, from which the remaining arms of the arm arrangement extend, and the locking device is arranged to lock against rotation between the base part and a neighbouring second arm connected to the base part via said hinge.

According to some embodiments, the locking device comprises an electromagnet.

According to some embodiments, the arrangement comprises a sensor for detecting a predetermined operative condition of the arm arrangement and a control unit, which is configured to control the locking device on basis of input from the sensor.

According to some embodiments, the arm arrangement comprises a manual grip element to be held by an operator during operation of the arrangement, and said predetermined condition is a condition in which an operator grips the manual element, and the control unit is arranged to make the locking device unlock against rotation between the first part and the second part of said hinge as a response to the detection of said predetermined condition by the sensor.

According to some embodiments, at least some of said wires are wound more than one turn around the first or second part around which it extends.

According to some embodiments, the arrangement comprises a first arm that forms a fixed distal end of the arm arrangement and forms a base part of the arrangement, from which the remaining arms of the arm arrangement extend, and that it comprise a second arm connected to the base part, a further first arm connected to said second arm, and a further second arm that is connected to said further first and that forms or is fixedly connected to a platform for carrying objects thereon.

According to some embodiments, it comprises an arrangement for moving objects according to the invention.

### BRIEF DESCRIPTION OF THE DRAWINGS

Embodiments of the invention will now be described with reference to the annexed drawing, on which:
Fig. 1 is a perspective view from below of an arrangement according to the present invention,
Fig. 2 is a view from below of the arrangement shown in fig. 1, with the arms thereof in a first position,
Fig. 3 is a view from below of the arrangement shown in fig. 1, with the arms thereof in a second position,
Fig. 4 is a view from below of the arrangement shown in fig. 1, with the arms thereof in a third position, and

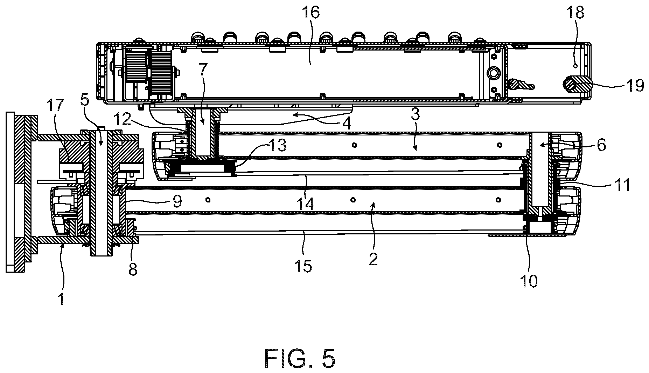

Fig. 5 is a cross sectional view from the side of a part of the arrangement shown in fig. 1.

### DETAILED DESCRIPTION

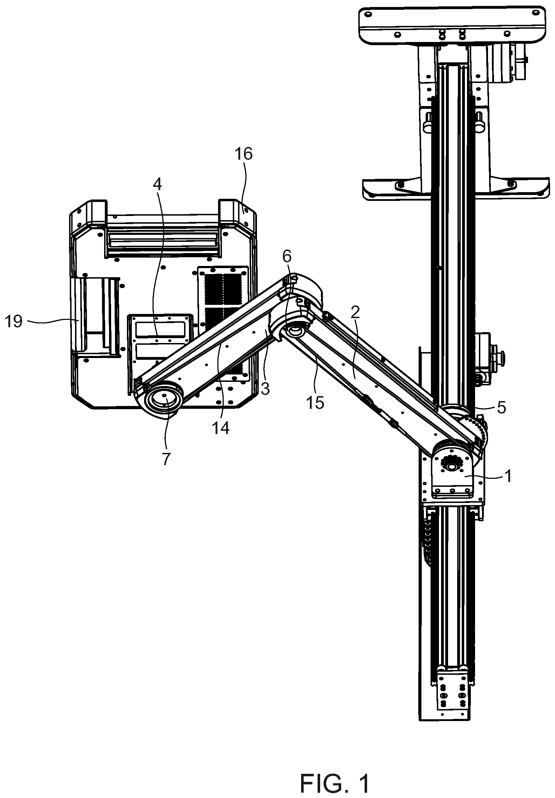

Fig. 1 shows an arrangement for moving objects, comprising a plurality of first arms 1, 3 and at least one second arm 2, 4. Each first arm 1, 3 is connected to a neighbouring second arm 2, 4 through a hinge 5, 6, 7 and each hinge 5, 6, 7 comprises a first part 8, 10, 12 fixedly connected to the first arm 1, 3 and a second part 9, 11, 13 fixedly connected to the second arm 2, 4. The first and second arms are thus arranged in series.

Each pair of a first part 8, 10, 12 and a second part 9, 11, 13 of a hinge 5, 6, 7 is rotably arranged in relation to each other around a rotational axis which is generally perpendicular to a longitudinal axis of the respective first and second arm 1 ,2, 3, 4 connected by the hinge 5, 6, 7.

Between each pair of hinges 6, 7 that connects a first arm 3 with two second arms 2, 4 there is provided a first wire 14, which extends from a first hinge 6 of that pair of hinges to a second hinge 7 of that pair of hinges and which extends around a second part 11 of said first hinge 6 and a second part 13 of said second hinge 7 of said pair of hinges 6, 7.

Between each pair of hinges 5, 6 that connects a second arm 2 with two first arms 1, 3 there is provided a second wire 15 which extends from a first hinge 5 of that pair of hinges 5, 6 to a second hinge 6 of that pair of hinges and which extends around a first part 8 of said first hinge 5 and a first part 10 of said second hinge 6 of said pair of hinges 5, 6.

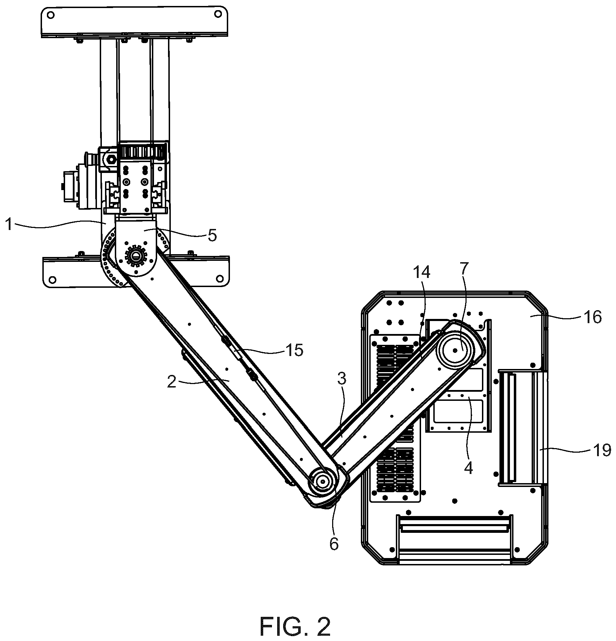

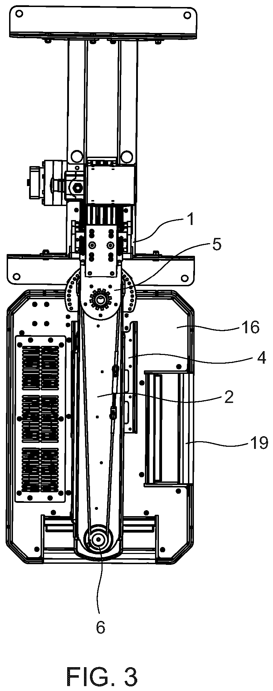

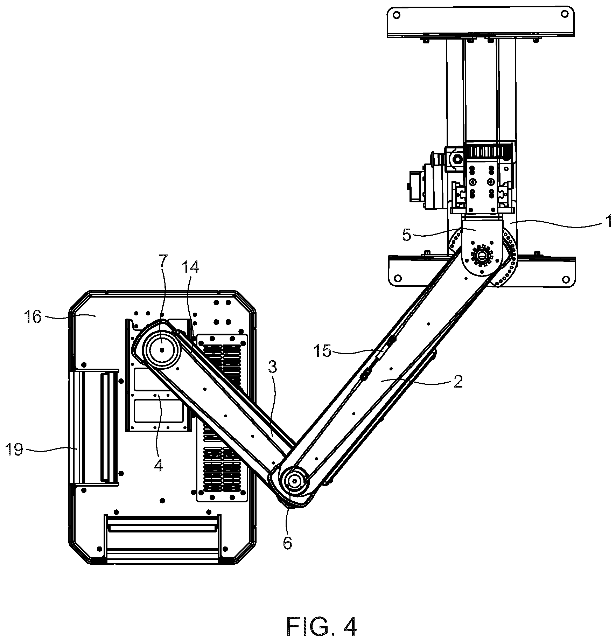

The first part and second part 8-13 of each respective hinge 5, 6, 7 has a portion which has the shape of a wheel or shaft with a predetermined diameter, and the respective wire 14, 15 extends around said portions of the respective wheel or shaft. The diameters of said portions of the respective first and second parts 8-13 are dimensioned such that the motion of an arm 4 forming a distal end of the arm arrangement will perform a linear motion with regard to a first arm 1 that forms an opposite fixed distal end of the arm arrangement. This linear motion is seen in figs. 2-4. The linear motion is a rectilinear motion.

The arm 4 that forms a distal end and that will perform a linear motion is fixedly connected to a platform 16 for carrying objects thereon.

The first arm 1 that forms a fixed distal end of the arm arrangement forms a base part of the arrangement, from which the remaining arms 2, 3, 4 of the arm arrangement extend.

When the arrangement is in an operational position, the base part 1 is non-rotable in the horizontal plane.

When the arrangement is in an operational position, the rotational axes of the hinges extend in a vertical direction.

At least one of the hinges 5 comprises a locking device 17 for locking against rotation between the first part 8 and the second part 9 of that hinge 5. A first arm 1 that forms a fixed distal end of the arm arrangement forms a base part of the arrangement, from which the remaining arms 2, 3, 4 of the arm arrangement extend, and the locking device 17 is arranged to lock against rotation between the base part 1 and a neighbouring second arm 2 connected to the base part 1 via said hinge 5.

The locking device 17 comprises an electromagnet.

The arrangement further comprises a sensor 18 for detecting a predetermined operative condition of the arm arrangement and a control unit not shown, which is configured to control the locking device 17 on basis of input from the sensor 18.

The arm arrangement comprises a manual grip element 19 to be held by an operator during operation of the arrangement, and that said predetermined condition is a condition in which an operator grips the manual element 19, and the control unit is arranged to make the locking device 17 unlock against rotation between the first part 8 and the second part 9 of said hinge 5 as a response to the detection of said predetermined condition by the sensor 18.

The wires 14, 15 are wound more than one turn around the first or second part 8, 13 around which they extend.

The arrangement comprises a first arm 1 that forms a fixed distal end of the arm arrangement and forms a base part of the arrangement, from which the remaining arms 2, 3, 4 of the arm arrangement extend. The arrangement also comprises a second arm 2 connected to the base part 1, a further first arm 3 connected to said second arm 2, and a further second arm 4 that is connected to said further first arm 3 and that forms or is fixedly connected to a platform 16 for carrying objects thereon.

The arrangement for moving object disclosed hereinabove may be part of an arrangement for moving luggage from a conveyor belt into a container.

## Claims

1. An arrangement for moving objects, comprising
- a plurality of first arms (1, 3) and at least one second arm (2, 4), each first arm (1, 3) being connected to a neighbouring second arm (2, 4) through a hinge (5, 6, 7) , each hinge (5, 6, 7) comprising
- a first part (8, 10, 12) fixedly connected to the first arm (1, 3) and
- a second part (9, 11, 13) fixedly connected to the second arm (2, 4),
- each pair of a first part (8, 10, 12) and a second part (9, 11, 13) of a hinge (5, 6, 7) being rotably arranged in relation to each other around a rotational axis which is generally perpendicular to a longitudinal axis of the respective first and second arm (1 ,2, 3, 4) connected by the hinge (5, 6, 7), said arrangement being
**characterised in that**:
- between each pair of hinges (6, 7) that connects a first arm (3) with two second arms (2, 4) there is provided a first wire (14), which extends from a first hinge (6) of that pair of hinges to a second hinge (7) of that pair of hinges and which extends around a second part (11) of said first hinge (6) and a second part (13) of said second hinge (7) of said pair of hinges (6, 7), and that,
- between each pair of hinges (5, 6) that connects a second arm (2) with two first arms (1, 3) there is provided a second wire (15) which extends from a first hinge (5) of that pair of hinges (5, 6) to a second hinge (6) of that pair of hinges and which extends around a first part (8) of said first hinge (5) and a first part (10) of said second hinge (6) of said pair of hinges (5, 6).

2. An arrangement according to claim 1, **characterised in that** said first part and second part (8-13) of each respective hinge (5, 6, 7) has a portion which has the shape of a wheel or shaft with a predetermined diameter, and that the respective wire (14, 15) extends around said portions of the respective wheel or shaft, and that the diameters of said portions of the respective first and second parts (8-13) are dimensioned such that the motion of an arm (4) forming a distal end of the arm arrangement will perform a linear motion with regard to a first arm (1) that forms an opposite fixed distal end of the arm arrangement.

3. An arrangement according to claim 2, **characterised in that** said linear motion is a rectilinear motion.

4. An arrangement according to claim 2 or 3, **characterised in that** the arm (4) that forms a distal end and that will perform a linear motion forms or is fixedly connected to a platform (16) for carrying objects thereon.

5. An arrangement according to any one of claims 2-4, **characterised in that** the first arm (1) that forms a fixed distal end of the arm arrangement forms a base part of the arrangement, from which the remaining arms (2, 3, 4) of the arm arrangement extend.

6. An arrangement according to claim 5, **characterised in that**, when the arrangement is in an operational position, the base part (1) is non-rotable in the horizontal plane.

7. An arrangement according to claim 5 or 6, **characterised in that**, when the arrangement is in an operational position, the rotational axes of the hinges extend in a vertical direction.

8. An arrangement according to any one of claims 1-7, **characterised in that** at least one of the hinges (5) comprises a locking device (17) for locking against rotation between the first part (8) and the second part (9) of that hinge (5).

9. An arrangement according to claim 8, **characterised in that** a first arm (1) that forms a fixed distal end of the arm arrangement forms a base part of the arrangement, from which the remaining arms (2, 3, 4) of the arm arrangement extend, and that the locking device (17) is arranged to lock against rotation between the base part (1) and a neighbouring second arm (2) connected to the base part (1) via said hinge (5).

10. An arrangement according to claim 8 or 9, **characterised in that** the locking device (17) comprises an electromagnet.

11. An arrangement according to any of claims 8-10, **characterised in that** it comprises a sensor (18) for detecting a predetermined operative condition of the arm arrangement and a control unit, which is configured to control the locking device on basis of input from the sensor (18).

12. An arrangement according to claim 11, **characterised in that** the arm arrangement comprises a manual grip element (19) to be held by an operator during operation of the arrangement, and that said predetermined condition is a condition in which an operator grips the manual element (19), and that the control unit is arranged to make the locking device (17) unlock against rotation between the first part (8) and the second part (9) of said hinge (5) as a response to the detection of said predetermined condition by the sensor (18).

13. An arrangement according to any one of claims 1-12, **characterised in that** at least some of said wires (14, 15) are wound more than one turn around the first or second part (8, 13) around which it extends.

14. An arrangement according to any one of claims 1-13, **characterised in that** it comprises a first arm (1) that forms a fixed distal end of the arm arrangement and forms a base part of the arrangement, from which the remaining arms (2, 3, 4) of the arm arrangement extend, and that it comprise a second arm (2) connected to the base part (1), a further first arm (3) connected to said second arm (2), and a further second arm (4) that is connected to said further first arm (3) and that forms or is fixedly connected to a platform (16) for carrying objects thereon.

15. An arrangement for moving luggage from a conveyor belt into a container, **characterised in that** it comprises an arrangement for moving objects according to any one of claims 1-14.
